# EUROPEAN PATENT APPLICATION

(11) **EP 4 651 038 A1**
(43) Date of publication of application: **19.11.2025**
(21) Application number: 25169294.3
(22) Date of filing: 08.04.2025
(51) Int. Cl.: G06N 10/20, G06N 10/60

(54) **RECORDING MEDIUM, INFORMATION PROCESSING METHOD, AND INFORMATION PROCESSING DEVICE**

(30) Priority: 16.05.2024 JP 2024080416
(71) Applicant: FUJITSU LIMITED, Kawasaki-shi, Kanagawa 211-8588 (JP)
(72) Inventor: KIMURA, Yusuke, Kawasaki-shi, 211-8588 (JP)
(74) Representative: Haseltine Lake Kempner LLP

(57) **Abstract**

An information processing device obtains M clauses that represent an SAT problem. The information processing device assigns each of the M clauses to one or more of A groups, A being an odd number. For each of the A groups, the information processing device creates a quantum circuit that represents all of clauses of the M clauses that belong to that group. The information processing device creates an oracle circuit in which the created quantum circuits are coupled together, and an amplifier circuit. The information processing device uses the created oracle circuit and amplifier circuit to generate information that makes it possible to identify a solution to the SAT problem.

## Description

### FIELD OF THE INVENTION

Embodiments discussed herein are related to a recording medium, an information processing method, and an information processing device.

### BACKGROUND OF THE INVENTION

Conventionally, there exists a satisfiability problem that searches for a combination of values of multiple variables that can take the value of 0 or 1 and that satisfies multiple conditions. In contrast, there exists a quantum algorithm called the Grover algorithm that uses a quantum computer to solve the satisfiability problem.

As an example of prior art, there is a technique that divides the search of the entire solution space into sub-problems and solves each sub-problem by enumerating multiple solutions that exist in the solution space. There is a technique that extracts from a logic formula, a partial predicate logic formula including an existence symbol and input data identification information that identifies input data including an element of the existence symbol. There is also a technique that solves, as a separate process, each partition of multiple partitions into which a clause of a satisfiability problem is divided. Also, for example, there is a technique for managing quantum memory based on a reversible pebbling game. For examples, refer to Japanese Laid-Open Patent Publication No. 2001-312530, Japanese Laid-Open Patent Publication No. 2013-012082, U.S. Patent Application Publication No. 2004/0210860, and U.S. Patent Application Publication No.2020/0202250.

### SUMMARY OF THE INVENTION

It is desirable to at least solve the above problems in the conventional technologies.

According to an aspect of an embodiment, a recording medium stores therein a program for causing a computer to execute a process for processing information, the process including: obtaining a plurality of clauses that express a satisfiability problem for a plurality of variables taking a value of 0 or 1, each of the plurality of clauses representing a condition satisfied by one or more of the plurality of variables; dividing the obtained plurality of clauses into an odd number of groups based on a number of auxiliary quantum bits used in expressing whether the condition is satisfied, the dividing including assigning each of the plurality of clauses to one or more of the odd number of the groups such that a number of clauses belonging to each of the odd number of the groups is not more than the number of the auxiliary quantum bits; creating a plurality of respective quantum circuits for the odd number of groups, each of the plurality of respective quantum circuits expressing all of the clauses belonging to a corresponding one of the odd number of groups and created using a plurality of quantum bits corresponding to each of the plurality of variables and the auxiliary quantum bits; and generating, according to the Grover algorithm, information that enables a solution to the satisfiability problem to be identified using an oracle circuit in which the created plurality of respective quantum circuits are coupled to each other, and an amplifier circuit that amplifies a probability of any quantum state that represents any combination of values, respectively, taken by the plurality of variables in accordance with the oracle circuit.

### BRIEF DESCRIPTION OF DRAWINGS

The invention is described, by way of example only, with reference to the following drawings, in which:
Fig. 1 is an explanatory view depicting one example of an information processing method according to an embodiment.
Fig. 2 is an explanatory view depicting an example of an information processing system 200.
Fig. 3 is a block diagram depicting an example of a hardware configuration of an information processing device 100.
Fig. 4 is a block diagram depicting an example of a hardware configuration of a computing device 201.
Fig. 5 is a block diagram depicting an example of a functional configuration of the information processing device 100.
Fig. 6 is an explanatory view depicting an example of operation of the information processing device 100.
Fig. 7 is an explanatory view depicting an example of the operation of the information processing device 100.
Fig. 8 is an explanatory view depicting an example of the operation of the information processing device 100.
Fig. 9 is an explanatory view depicting a specific example of the operation of the information processing device 100.
Fig. 10 is an explanatory view depicting a specific example of the operation of the information processing device 100.
Fig. 11 is a flowchart depicting an example of an overall processing procedure.

### DESCRIPTION OF THE INVENTION

First, problems associated with the conventional techniques are discussed. The conventional techniques have a problem in that the number of quantum bits used when solving a satisfiability problem becomes enormous. For example, the more conditions that form a satisfiability problem, the more quantum bits are used when solving the satisfiability.

Embodiments of a recording medium, an information processing method, and an information processing device according to the present invention are described in detail with reference to the accompanying drawings.

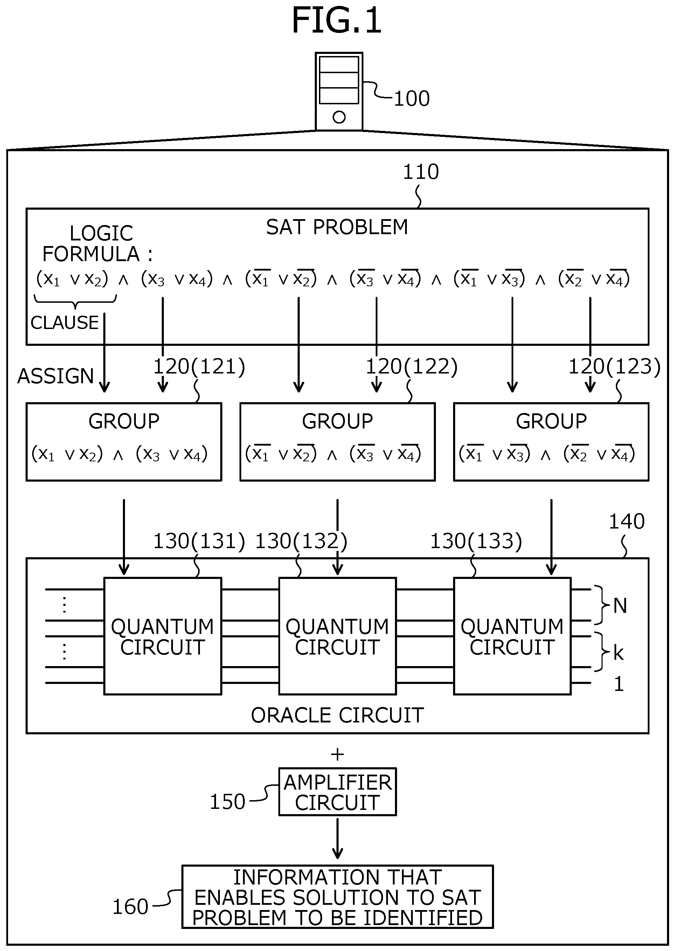

Fig. 1 is an explanatory view depicting one example of an information processing method according to an embodiment. An information processing device 100 is a computer that supports solving a satisfiability problem. The information processing device 100 is, for example, a server or a personal computer (PC). In the following description, the satisfiability problem may be written as a "SAT problem".

The SAT problem is to search for a combination of values for each of multiple variables that can take a value of 0 or 1, the combination of values satisfying all of conditions among multiple condition . The variables are of a Boolean type. The conditions may be expressed by a logic formula. Each condition may be expressed by information called a clause in the logic formula. For example, in the SAT problem, when there is a combination of values of variables that satisfies all of the conditions, the combination is output as a solution. For example, in the SAT problem, when there is no combination of values of variables that satisfies all of the conditions, "UNSAT" is output, indicating that there is no solution. In addition, the SAT problem may be specified in the CNF format or the Dimacs format.

Here, to improve the speed at which the SAT problem is solved, it is conceivable to use a quantum operation when solving the SAT problem and solve the SAT problem by a series of quantum operations. A quantum operation is, for example, an operation of applying a gate to a quantum bit. The gate represents an operation performed on the quantum bit. The quantum operation is, for example, performed by an actual quantum computer or a quantum simulator that simulates a quantum computer. The quantum operation is expressed as a quantum circuit. A quantum circuit includes multiple gates and represents a series of operations to be performed on quantum bits. The quantum simulator, for example, executes a quantum circuit and calculates a final quantum state. For example, a state vector type quantum simulator expressing a quantum state with a vector, or a decision graph type quantum simulator expressing a quantum state with a decision graph is conceivable.

For example, there is a quantum algorithm called the Grover algorithm that uses a quantum computer to solve SAT problems. For example, in the Grover algorithm, a solution is obtained by executing a quantum circuit that includes an oracle unit and an amplifier unit and by amplifying the probability of any quantum state that represents a combination of the values of each of the variables that is a solution. The oracle unit is a partial quantum circuit that implements a function of inverting the phase of any quantum state that represents a combination of the values of variables, the combination satisfying all of the conditions. The amplifier unit is a partial quantum circuit that implements a function of amplifying the probability of a quantum state in which the phase is inverted. The amplifier unit is also called a diffusion unit.

In the conventional technique, however, there is a problem in that the number of quantum bits used when solving a SAT problem becomes enormous. For example, the more conditions that form the SAT problem, the more quantum bits are used to solve the SAT problem. For example, when solving an SAT problem that includes M conditions related to N variables, N+M+1 quantum bits are used. Here, M tends to be greater than N, and the greater is M, the greater is the number of quantum bits used to solve the SAT problem.

Here, in an actual quantum computer, the number of quantum bits that can be prepared may be limited. Therefore, when the number of quantum bits used to solve the SAT problem increases, it may become impossible to solve the SAT problem using the quantum computer. In addition, in an actual quantum computer, errors may occur in the quantum bits due to environmental noise, interference from other quantum bits, and noise during operation of the quantum bits, thus, it is preferable to reduce the number of quantum bits used to solve the SAT problem. In addition, the more quantum bits used to solve the SAT problem, the longer the processing time required to solve the SAT problem may be, thus, it is preferable to reduce the number of quantum bits used to solve the SAT problem. For example, when a user pays a fee according to the usage time to use an actual quantum computer, it is preferable to reduce the number of quantum bits used when solving the SAT problem in order to reduce the usage time.

On the other hand, in a quantum simulator, the number of available quantum bits may be limited from the viewpoint of memory capacity for storing quantum bits. Hence, when the number of quantum bits used when solving the SAT problem increases, it may become impossible to solve the SAT problem using the quantum simulator. In addition, the more quantum bits used when solving the SAT problem, the longer the processing time required to solve the SAT problem may be, thus, it is preferable to reduce the number of quantum bits used when solving the SAT problem. In this manner, it is considered preferable to reduce the number of quantum bits used when solving the SAT problem in both cases of solving the SAT problem using an actual quantum computer and solving the SAT problem using a quantum simulator.

Thus, in the present embodiment, an information processing method is described that can reduce the number of quantum bits used when solving the SAT problem. According to the information processing method, for example, when solving an SAT problem, it is possible to use k quantum bits, which is less than M, irrespective of the number of clauses, instead of using M quantum bits according to the number of clauses. Therefore, according to this information processing method, for example, it is possible to use N+k+1 quantum bits when solving an SAT problem.

In Fig. 1, the information processing device 100 can use an actual quantum computer or a quantum simulator. For example, the information processing device 100 may be an actual quantum computer. For example, the information processing device 100 may have a quantum simulator. For example, the information processing device 100 may use a quantum computer of another computer.

The information processing device 100 stores an SAT problem 110. The SAT problem 110 includes, for example, M conditions related to N variables. The variables take the value of 0 or 1. For example, the SAT problem 110 includes M clauses. Each clause represents a condition that one or more of the N variables satisfy. The SAT problem 110 is, for example, expressed by a logic formula representing M conditions. In the example depicted in Fig. 1, N=4, M=6. A horizontal line above a letter in the figure represents negation. In the following description, for convenience, any letter with a horizontal line thereabove may be written as a "¬letter".

An example of a condition is xᵢVxⱼ or ¬xᵢV¬xⱼ. xᵢVxⱼ represents that xᵢ or xⱼ has a value of 1 and is true. ¬xᵢV¬xⱼ represents that ¬xᵢ or ¬xⱼ has a value of 1 and is true. In other words, ¬xᵢV¬xⱼ represents that xᵢ or xⱼ has a value of 0 and is false. The condition may be, for example, xᵢV¬xⱼ or ¬xᵢVxⱼ. xiV¬xⱼ indicates that xᵢ or ¬xⱼ is 1 and true. ¬xᵢVxⱼ indicates that ¬xᵢ or xⱼ is 1 and true.

Here, it is assumed that the number of quantum bits available to the information processing device 100 when solving the SAT problem 110 is less than N+M+1, and that X=N+k+1. Therefore, it is assumed that the number of first auxiliary quantum bits available to the information processing device 100 when expressing whether a condition is satisfied among X quantum bits is k. k is less than M. In the example depicted in Fig. 1, it is assumed that k=2. In the conventional technique, when the number of available quantum bits is less than N+M+1, the SAT problem 110 cannot be solved.

(1-1) The information processing device 100 obtains M clauses expressing the SAT problem 110. The information processing device 100 divides the M clauses into A groups 120, A being an odd number. The information processing device 100, for example, assigns each of the M clauses to one or more of the A groups 120. The information processing device 100 assigns each of the M clauses based on, for example, the number k of the first auxiliary quantum bits, such that the number of clauses that, among the obtained M clauses, belong to each of the A groups 120 is not more than the number k.

The odd number is, for example, equal to or greater than M/k. It is preferable that the odd number is the smallest integer equal to or greater than M/k. In the example depicted in Fig. 1, the odd number A is 3. For example, the A groups 120 are three groups 121, 122, and 123.

In the example depicted in Fig. 1, the information processing device 100, for example, assigns each of the six clauses into the three groups 121 to 123 such that the number of clauses belonging to each group 120 is not more than the number k of the first auxiliary quantum bits, k=2. For example, the group 121 includes x₁Vx₂ and x₃Vx₄. Also, for example, the group 122 includes ¬x₁V¬x₂ and ¬x₃V¬x₄. Also, for example, the group 123 includes ¬x₁V¬x₃ and ¬x₂V¬x₄.

The information processing device 100 may assign each clause to one or more of the A groups 120 so that at least one of the M clauses is assigned in a duplicated manner to two or more of the A groups 120. The information processing device 100 may also assign each clause to one or more of the A groups 120 so that each clause is not assigned in a duplicated manner to two or more of the A groups 120.

(1-2) The information processing device 100 creates a quantum circuit 130 that expresses all the clauses belonging to the group 120 among the M clauses for each of the A groups 120. The quantum circuit 130 expresses all the clauses belonging to the group 120 among the M clauses by using X quantum bits including quantum bits corresponding to each variable of the N variables, k first auxiliary quantum bits, and one second auxiliary quantum bit. When all the conditions represented by the clauses belonging to the group 120 are satisfied, the quantum circuit 130 inverts the phase of the second auxiliary quantum bit to manage whether all the conditions represented by the clauses belonging to the group 120 are satisfied, according to the first auxiliary quantum bit. In the example depicted in Fig. 1, the information processing device 100, for example, creates quantum circuits 131 to 133.

(1-3) The information processing device 100 creates an oracle circuit 140 in which the created quantum circuits 130 are linked, and an amplifier circuit 150 that amplifies the probability of any quantum state that represents any combination of values taken by each variable according to the oracle circuit 140. The information processing device 100 creates an oracle circuit 140 in which the created quantum circuits 130 are linked, and an amplifier circuit 150 corresponding to the oracle circuit 140, for example, according to the Grover algorithm.

For example, when the phase of the second auxiliary quantum bit is finally inverted for a combination of the values taken by the variables, the amplifier circuit 150 amplifies the probability of a quantum state representing the combination. Here, in B groups 120 (B being an odd number less than A) among the A groups 120, when all the conditions, respectively, represented by the clauses belonging to the groups 120 are satisfied, the phase of the second auxiliary quantum bit is finally inverted. Therefore, the amplifier circuit 150 amplifies the probability of a quantum state representing a combination of values taken by the variables and satisfying at least all the conditions represented, respectively, by the M clauses. On the other hand, the amplifier circuit 150 may amplify the probability of a quantum state representing a combination of values taken by each variable that partially satisfies the conditions represented by each clause of the M clauses.

(1-4) The information processing device 100 uses the created oracle circuit 140 and the amplifier circuit 150 to generate information 160 that enables a solution to the SAT problem 110 to be identified. Here, the information 160 that enables the solution of the SAT problem 110 to be identified is, for example, information that narrows down the solution candidates of the SAT problem 110, and is information that facilitates characterization of the solution of the SAT problem 110.

The information processing device 100 creates a concatenated quantum circuit by concatenating the created oracle circuit 140 and the amplifier circuit 150, for example. The information processing device 100 executes the created concatenated quantum circuit via an actual quantum computer or a quantum simulator to calculate the probability of a quantum state that represents each of multiple combinations that can be formed by the values that each variable takes. The information processing device 100 generates and outputs the information 160 that enables the solution of the SAT problem 110 to be identified, including the calculated probability. The output format is, for example, display on a display, print out on a printer, transmission to an external device, or storage to a storage area.

Here, the probability of a quantum state that represents any combination that is a solution among the multiple combinations is amplified. Therefore, the information 160 enabling the solution of the SAT problem 110 to be identified indicates at least one combination that is likely to be the solution of the SAT problem 110 among the multiple combinations. This allows the information processing device 100 to enable the solution of the SAT problem 110 to be identified while reducing the number of quantum bits used when solving the SAT problem 110. For example, the information processing device 100 can enable the solution of the SAT problem 110 to be solved by using only N+k+1 quantum bits.

(1-5) The information processing device 100 may refer to the information 160 enabling the solution of the SAT problem 110 to be identified and output the solution candidates of the SAT problem 110. The output format may be, for example, display on a display, print out on a printer, transmission to an external device, or storage to a storage area. The information processing device 100, for example, refers to the information 160 that enables the solution of the SAT problem 110 to be identified, and determines any combination of values taken by each variable corresponding to a quantum state with the highest probability as a solution candidate for the SAT problem 110. In this manner, the information processing device 100 can make the solution candidates for the SAT problem 110 externally referenceable.

The information processing device 100, for example, refers to the information 160 that enables the solution of the SAT problem 110 to be identified, and determines any combination of values taken by each variable corresponding to a quantum state with a probability equal to or greater than a threshold as a solution candidate for the SAT problem 110. For example, the information processing device 100 refers to the information 160 that enables the solution of the SAT problem 110, and determines that there is no solution to the SAT problem 110 when there is no combination of values taken by each variable corresponding to a quantum state with a probability equal to or greater than a threshold. For example, when the information processing device 100 determines that there is no solution to the SAT problem 110, the information processing device 100 outputs UNSAT. This allows the information processing device 100 to make the solution candidates of the SAT problem 110 externally referenceable.

The information processing device 100 may determine whether the determined solution candidates are the actual solutions of the SAT problem 110, and may output the actual solutions of the SAT problem 110. For example, when there is a solution candidate that satisfies all the conditions expressed by each clause among the determined solution candidates of the SAT problem 110, the information processing device 100 determines the solution candidate as the solution of the SAT problem 110 and outputs the solution candidate as the solution. For example, when there is no solution candidate that satisfies all the conditions expressed by each clause, the information processing device 100 determines that there is no solution of the SAT problem 110, and outputs UNSAT. This allows the information processing device 100 to make the actual solutions of the SAT problem 110 externally referenceable.

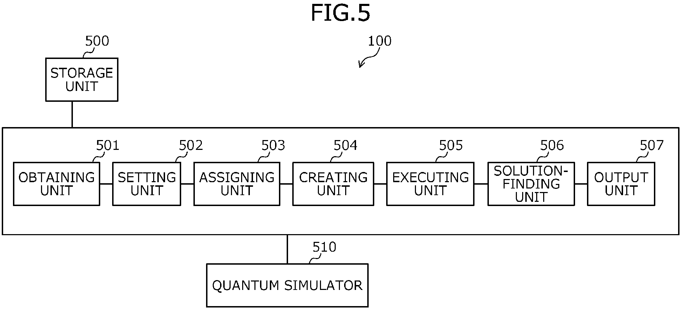

Here, while a case where the information processing device 100 randomly assigns each clause to one or more of the A groups 120 has been described, the present invention is not limited hereto. For example, the information processing device 100 may randomly assign each clause to one or more of the A groups 120 multiple times. A specific example of this case is described later with reference to Figs. 5 to 9.

Here, while a case where the functions of the information processing device 100 are implemented by a single computer has been described, the present invention is not limited hereto. For example, the functions of the information processing device 100 may be implemented by a coordination of multiple computers. For example, the functions of the information processing device 100 may be implemented on a cloud.

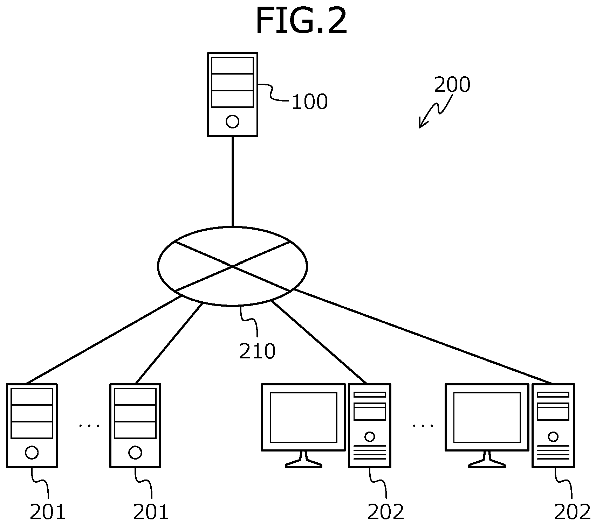

Next, with reference to Fig. 2, an example of an information processing system 200 to which the information processing device 100 depicted in Fig. 1 is applied is described.

Fig. 2 is an explanatory view depicting an example of the information processing system 200. In Fig. 2, the information processing system 200 includes an information processing device 100, one or more computing devices 201, and one or more client devices 202.

In the information processing system 200, the information processing device 100 and the computing device 201 are connected via a wired or wireless network 210. The network 210 is, for example, a local area network (LAN), a wide area network (WAN), the Internet, or the like. In the information processing system 200, the information processing device 100 and the client device 202 are connected via the wired or wireless network 210.

The information processing device 100 is a computer that aides in solving SAT problems. The information processing device 100 obtains, for example, a processing request requesting the solving of an SAT problem. The processing request includes, for example, N variables and M clauses that form the SAT problem. A clause represents a condition that one or more of the N variables satisfy.

The information processing device 100, for example, receives a processing request from another computer and thereby obtains the processing request. The other computer is, for example, the client device 202. The information processing device 100, for example, receives the processing request by receiving the input of the processing request based on user operation input via an input device not depicted.

The information processing device 100 stores multiple combinations of the values taken by each of the N variables. The information processing device 100 stores a number X of quantum bits that can be used when solving the SAT problem. When X=N+k+1, the number of first auxiliary quantum bits that can be used when expressing whether a condition is satisfied is k. k is less than M. The information processing device 100 stores the number k of first auxiliary quantum bits that can be used when expressing whether a condition is satisfied.

In response to obtaining a processing request, the information processing device 100 calculates the number A of the groups (A being an odd number), based on the number M of clauses and the number k of first auxiliary quantum bits. The information processing device 100 calculates, for example, the number A of the groups, where A is the smallest odd number equal to or greater than M/k.

The information processing device 100 repeatedly performs assignment of M clauses to the A groups multiple times. For each assignment of the M clauses, the information processing device 100 creates, for each of the A groups to which the clauses are assigned, a quantum circuit that expresses all clauses that, among the M clauses, belong to the group. For each assignment of the M clauses, the information processing device 100 creates a pair of an oracle circuit that connects the quantum circuits created in the corresponding time and an amplifier circuit that corresponds to the oracle circuit.

For each created pair, the information processing device 100 creates a connected quantum circuit that connects the oracle circuit and the amplifier circuit of the pair. The information processing device 100 sequentially executes the created linked quantum circuits and thereby calculates the probabilities of quantum states, respectively, representing combinations that may be formed by the values taken by the variable. The information processing device 100, for example, controls the computing device 201 to sequentially execute the linked quantum circuits to calculate the probabilities of the quantum states representing the combinations that may be formed by the values taken by the variables. The information processing device 100 may transmit the calculated probabilities to the client device 202.

The information processing device 100 determines a solution candidate for the SAT problem based on the calculated probabilities of the quantum states representing the combinations that may be formed by the values taken by the variables. The information processing device 100 determines, for example, each combination represented by a quantum state whose calculated probability is equal to or greater than a threshold value as a solution candidate for the SAT problem. The information processing device 100 may transmit the determined solution candidate for the SAT problem to the client device 202.

The information processing device 100 judges whether the determined solution candidate of the SAT problem is an actual solution of the SAT problem based on the M clauses. For example, among the determined solution candidates of the SAT problem, the information processing device 100 determines a solution candidate that satisfies all the conditions, respectively, expressed by the clauses, as an actual solution of the SAT problem. For example, when there is no solution candidate that, among the determined solution candidates of the SAT problem, satisfies all the conditions, respectively, expressed by the clauses, the information processing device 100 judges that an actual solution of the SAT problem does not exist. The information processing device 100 transmits the determined actual solution of the SAT problem to the client device 202. When the information processing device 100 judges that an actual solution of the SAT problem does not exist, the information processing device 100 may transmit UNSAT to the client device 202. The information processing device 100 is, for example, a server or a PC.

The computing device 201 is a computer for performing quantum computing. The computing device 201 shares all or part of a specific quantum computation under the control of the information processing device 100. For example, the computing device 201 sequentially executes a concatenated quantum circuit in which a pair of an oracle circuit and an amplifier circuit corresponding to the oracle circuit are concatenated under the control of the information processing device 100. The computing device 201 transmits to the information processing device 100, the probabilities of quantum states, respectively, representing combinations that can be formed by the values taken by the variables, the probabilities being obtained as a result of sequentially executing the concatenated quantum circuits. For example, the computing device 201 may be a classical computer that runs a quantum simulator. In this case, the computing device 201 may be, for example, a server or a PC. Also, the computing device 201 may be, for example, an actual quantum computer.

The client device 202 is a computer used by a user who wants to solve an SAT problem. Based on an operation input by the user, the client device 202 generates a processing request requesting the solving of an SAT problem and transmits the processing request to the information processing device 100. The client device 202 receives solutions to the SAT problems from the information processing device 100. The client device 202 outputs the solutions to the SAT problems so that the user can refer to the solutions. The client device 202 is, for example, a PC, a tablet terminal, or a smartphone.

Here, while a case where the information processing device 100 and the computing device 201 are different devices has been described, configuration is not limited hereto. For example, the information processing device 100 may have the functions of the computing device 201 and may also operate as the computing device 201. In addition, while a case where the information processing device 100 and the client device 202 are different devices has been described, configuration is not limited hereto. For example, the information processing device 100 may have the functions of the client device 202 and may also operate as the client device 202.

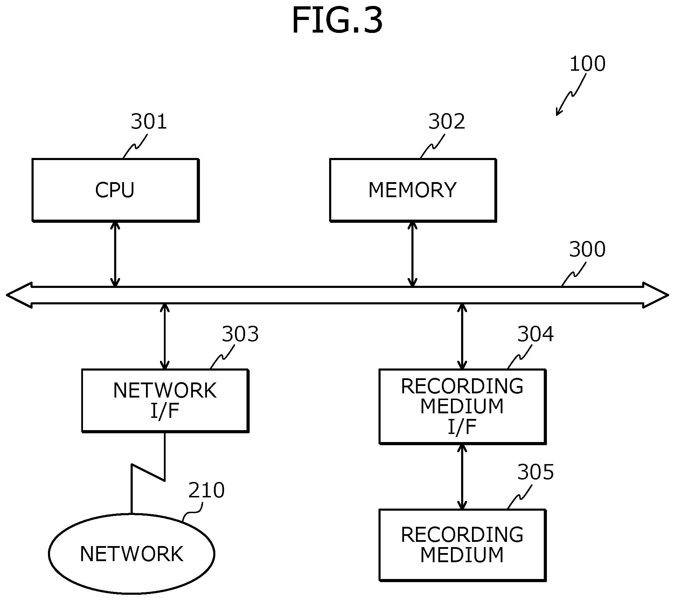

An example of a hardware configuration of the information processing device 100 is a described with reference to Fig. 3.

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. The components are connected to each other by a bus 300.

Here, the CPU 301 governs overall control of the information processing device 100. The memory 302, for example, includes a read-only memory (ROM), a random-access memory (RAM), and a flash ROM. For example, the flash ROM and/or the ROM store therein various programs and the RAM is used as a work area of the CPU 301. Programs stored by the memory 302 are loaded onto the CPU 301, whereby encoded processes are executed by the CPU 301.

The network I/F 303 is connected to the network 210 through a communications line and is connected to other computers via the network 210. Further, the network I/F 303 administers an internal interface with the network 210 and controls the input and output of data from other computers. The network I/F 303, for example, is a modem, a LAN adapter, etc.

The recording medium I/F 304, under the control of the CPU 301, controls the reading and writing of data with respect to the recording medium 305. The recording medium I/F 304, for example, is a disk drive, a solid-state drive (SSD), a universal serial bus (USB) port, etc. The recording medium 305 is a nonvolatile memory that stores therein data written thereto under the control of the recording medium I/F 304. The recording medium 305, for example, is a disk, a semiconductor memory, a USB memory, etc. The recording medium 305 may be removable from the information processing device 100.

In addition to the components above, the information processing device 100 may have, for example, a keyboard, a mouse, a display, a printer, a scanner, a microphone, a speaker, etc. Further, the information processing device 100 may have the recording medium I/F 304 and the recording medium 305 in plural. Further, the information processing device 100 may omit the recording medium I/F 304 and the recording medium 305.

An example of the hardware configuration of the computing device 201 in a case where the computing device 201 is a classical computer that runs a quantum simulator is a same as the example of the hardware configuration of the information processing device 100 depicted in Fig. 3 and thus, description thereof is omitted herein.

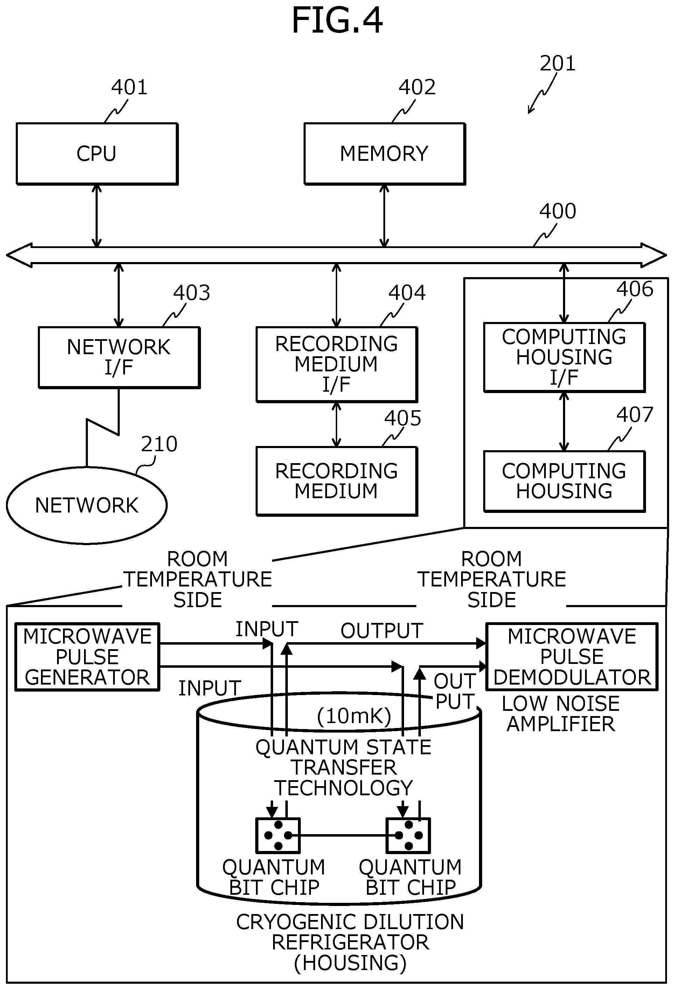

On the other hand, the computing device 201 may be an actual quantum computer. Here, an example of the hardware configuration of the computing device 201 in a case where the computing device 201 is an actual quantum computer is described with reference to Fig. 4.

Fig. 4 is a block diagram depicting an example of the hardware configuration of the computing device 201. In Fig. 4, the computing device 201 has a CPU 401, a memory 402, a network I/F 403, a recording medium I/F 404, and a recording medium 405. The computing device 201 further has a computing housing I/F 406 and a computing housing 407. Moreover, each component is connected by a bus 400.

Here, the CPU 401 governs overall control of the computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is connected to the network 210 through a communications line and is connected to other computers via the network 210. The network I/F 403 administers the internal interface with the network 210 and controls the input and output of data from other computers. The network I/F 403 is, for example, a modem or a LAN adapter.

The recording medium I/F 404 controls the reading and writing of data with to the recording medium 405 under the control of the CPU 401. The recording medium I/F 404 is, for example, a disk drive, an SSD, a USB port, etc. The recording medium 405 is a non-volatile memory that stores data written thereto under the control of the recording medium I/F 404. The recording medium 405 is, for example, a disk, a semiconductor memory, a USB memory, etc. The recording medium 405 may be removable from the computing device 201.

The computing housing I/F 406 controls access to the computing housing 407 under the control of the CPU 401. The computing housing I/F 406 converts signals output from the CPU 401 into input signals for the computing housing 407 using a microwave pulse generator, and transmits the converted signals to the computing housing 407. The computing housing I/F 406 converts the signals output from the computing housing 407 into input signals for the CPU 401 using a microwave pulse demodulator, and transmits the converted signals to the CPU 401. The computing housing 407 is a computing device equipped with one or more quantum bit chips cooled to an extremely low temperature of 10 mK. The quantum bit chip represents, for example, a logical quantum bit. The computing housing 407 performs a predetermined operation according to an input signal using one or more quantum bit chips, and outputs an output signal corresponding to the result of performing the predetermined operation.

In addition to the above-mentioned components, the computing device 201 may have, for example, a keyboard, a mouse, a display, a printer, a scanner, a microphone, a speaker, and the like. The computing device 201 may also have the recording medium I/F 404 and recording medium 405 in plural. Moreover, the computing device 201 may omit the recording medium I/F 404 or the recording medium 405. Moreover, the quantum bit chip in the computing case 407 may be controlled by a method other than microwaves. The quantum bit chip in the computing case 407 may implement, for example, optical quantum bits.

The hardware configuration example of the client device 202 is for example similar to the example of the hardware configuration of the information processing device 100 depicted in Fig. 3 and thus, description thereof is omitted.

Next, an example of a functional configuration of the information processing device 100 is described with reference to Fig. 5.

Fig. 5 is a block diagram depicting an example of a functional configuration of the information processing device 100. The information processing device 100 includes a storage unit 500, an obtaining unit 501, a setting unit 502, an assigning unit 503, a creating unit 504, an executing unit 505, a solution-finding unit 506, and an output unit 507.

The storage unit 500 is implemented, for example, by a storage area such as the memory 302 or the recording medium 305 depicted in Fig. 3. Below, while a case where the storage unit 500 is included in the information processing device 100 is described, configuration is not limited hereto. For example, the storage unit 500 may be included in a device different from the information processing device 100, and the contents stored in the storage unit 500 may be referenced from the information processing device 100.

The obtaining unit 501 to the output unit 507 function as an example of a control unit. For example, functions of the obtaining unit 501 to the output unit 507 are implemented by, for example, causing the CPU 301 execute a program stored in a storage area such as the memory 302 or the recording medium 305 depicted in Fig. 3, or by the network I/F 303. The processing results of each functional unit are stored to, for example, a storage area such as the memory 302 or the recording medium 305 depicted in Fig. 3.

The storage unit 500 stores various types of information that is referred to or updated in the processing by the functional units. The storage unit 500 stores, for example, an SAT problem. For example, the storage unit 500 stores N variables and M clauses that form an SAT problem. The variables have a value of 0 or 1. The clauses are information that represent conditions that one or more of the N variables satisfy. The SAT problem is obtained, for example, by the obtaining unit 501.

It is assumed that there are multiple quantum bits that can be used when solving an SAT problem. It is assumed that the number of quantum bits is X. The multiple quantum bits include, for example, quantum bits that become variable quantum bits corresponding to different variables among N variables. The number of variable quantum bits is N. The multiple quantum bits include, for example, quantum bits that become first auxiliary quantum bits used when expressing whether a condition is satisfied. When X=N+k+1, the number of first auxiliary quantum bits is k. The multiple quantum bits include, for example, quantum bits that become second auxiliary quantum bits that invert the phase when all of one or more specific conditions are satisfied according to the first auxiliary quantum bits. The number of second auxiliary quantum bits is, for example, 1.

The storage unit 500 stores, for example, the number k of first auxiliary quantum bits used when expressing whether a condition is satisfied among the multiple quantum bits that can be used when solving an SAT problem. The number k of first auxiliary quantum bits is obtained by, for example, the obtaining unit 501. The number k of first auxiliary quantum bits may be set in advance by, for example, a user. The storage unit 500 may store, for example, the number X of quantum bits that can be used when solving an SAT problem. The number X of quantum bits is obtained by, for example, the obtaining unit 501. The number X of quantum bits may be set in advance by, for example, a user.

The obtaining unit 501 obtains various types of information used in the processing by the functional units. The obtaining unit 501 stores the obtained information to the storage unit 500 or outputs the information to the functional units. The obtaining unit 501 may also output the information stored in the storage unit 500 to the functional units. The obtaining unit 501 obtains various types of information based on, for example, user operation input. The obtaining unit 501 may receive various information from, for example, a device different from the information processing device 100.

The obtaining unit 501 obtains, for example, a processing request requesting the solving of an SAT problem. The processing request may include an SAT problem. The processing request may include, for example, N variables and M clauses forming an SAT problem. For example, the obtaining unit 501 obtains the processing request by receiving an input of the processing request. The obtaining unit 501 may, for example, obtain the processing request by receiving the processing request from another computer. The other computer is, for example, the client device 202.

The obtaining unit 501 obtains, for example, SAT questions. The obtaining unit 501 may, for example, obtain the SAT questions by extracting the SAT questions from the processing request. The obtaining unit 501 may, for example, obtain the SAT questions by receiving an input of the SAT questions. The obtaining unit 501 may, for example ,obtain the SAT questions by receiving the SAT questions from another computer. The other computer is, for example, the client device 202.

The obtaining unit 501 obtains, for example, M clauses. The obtaining unit 501 may, for example, obtain the M clauses by extracting the M clauses from the SAT questions. The obtaining unit 501 may, for example, obtain the M clauses by receiving an input of the M clauses. The obtaining unit 501 may, for example, obtain M clauses by receiving M clauses from another computer. The other computer may be, for example, the client device 202.

The obtaining unit 501 may obtain, for example, the number X of quantum bits. The obtaining unit 501 may, for example, obtain the number X of quantum bits by receiving an input of the number X of quantum bits. The obtaining unit 501 may, for example, obtain the number X of quantum bits by receiving the number X of quantum bits from another computer. The other computer may be, for example, the client device 202.

The obtaining unit 501 may obtain, for example, the number k of first auxiliary quantum bits. The obtaining unit 501 may, for example, obtain the number k of first auxiliary quantum bits by receiving an input of the number k of the first auxiliary quantum bits. The obtaining unit 501 may, for example, obtain the number k of first auxiliary quantum bits by receiving the number k of the first auxiliary quantum bits from another computer. The other computer may be, for example, the client device 202. For example, the obtaining unit 501 may obtain the number k of the first auxiliary quantum bits by calculating the number k of the first auxiliary quantum bits based on N and the number X of quantum bits.

The obtaining unit 501 may receive a start trigger for starting the processing of any of the functional units. The start trigger may be, for example, a predetermined operation input by a user. The start trigger may be, for example, a receipt of predetermined information from another computer. The start trigger may be, for example, an output of predetermined information by the functional units. The obtaining unit 501 may receive, for example, a processing request as a start trigger for starting the processing of the setting unit 502, the assigning unit 503, the creating unit 504, and the executing unit 505.

The setting unit 502 sets a division number d, which is an odd number, indicating how many groups the M clauses are to be assigned to, based on the number k of the first auxiliary quantum bits. The setting unit 502 sets the division number d, which is an odd number equal to or greater than the value obtained by dividing the number M of clauses by the number k of the first auxiliary quantum bits. For example, the setting unit 502 preferably sets the division number d to be the smallest odd number equal to or greater than the number of clauses M divided by the number k of first auxiliary quantum bits. This allows the setting unit 502 to appropriately set how many groups the M clauses are to be divided into.

The assigning unit 503 assigns each of the M clauses to one or more of the d groups based on the number k of the first auxiliary quantum bits. For example, the assigning unit 503 assigns each of the M clauses to one or more of the d groups such that the number of clauses belonging to each of the d groups among the M clauses is not more than the number k of the first auxiliary quantum bits. This allows the assigning unit 503 to obtain a guideline for creating d quantum circuits and to identify d groups indicating what kind of clauses are to be expressed in each quantum circuit.

At this time, the assigning unit 503 may assign each clause to one or more of the d groups so that at least one of the M clauses is assigned to two or more of the d groups in a duplicated manner. This allows the assigning unit 503 to obtain a guideline for creating d quantum circuits so that the accuracy of solving the SAT problem is improved.

Also, at this time, the assigning unit 503 may assign each clause to one or more of the d groups so that each clause is not assigned to two or more of the d groups in a duplicated manner. This allows the assigning unit 503 to obtain a guideline for creating d quantum circuits so that the scale of each quantum circuit is reduced.

The assigning unit 503 may repeat the assigning process of assigning each clause to one or more of the d groups multiple times. This allows the assigning unit 503 to obtain a guideline for creating d quantum circuits multiple times so that the accuracy of solving the SAT problem is improved.

The creating unit 504 uses N variable quantum bits and k first auxiliary quantum bits and creates a quantum circuit for each of the d groups to which clauses are assigned by the assigning unit 503, the quantum circuit expressing all the clauses that, among the M clauses, belong to the group. In this manner, for each group, the creating unit 504 can create a quantum circuit that can determine whether all the conditions represented by the clauses belonging to the group are satisfied.

The creating unit 504 creates a pair of an oracle circuit in which the created quantum circuits are connected according to the Grover algorithm, and an amplifier circuit that amplifies the probability of any quantum state that represents a combination of values that each variable takes according to the oracle circuit. In this manner, the creating unit 504 can create an amplifier circuit that can amplify the probability of any quantum state that represents a combination that satisfies all the conditions, respectively, represented by the M clauses according to the oracle circuit.

Here, when the assigning unit 503 performs the assignment process multiple times, for each performance of the assignment process, the creating unit 504 creates, for each of the d groups to which the assigning unit 503 has assigned each clause in the corresponding assignment process, a quantum circuit that expresses all the clauses belonging to the group. For each performance of the assignment process, the creating unit 504 creates a pair of an oracle circuit that connects the created quantum circuits and an amplifier circuit that amplifies the probability of any quantum state that represents a combination of values that variables take according to the oracle circuit. This allows the creating unit 504 to create plural pairs of an oracle circuit and an amplifier circuit.

The executing unit 505 uses the pair created by the creating unit 504 to generate output information that enables the solution to the SAT problem to be identified. The output information includes, for example, the probabilities of quantum states that, respectively, represent combinations that can be formed by the values that the variables take. The executing unit 505 generates output information, for example, by executing the pair created by the creating unit 504 via the quantum simulator 510. The executing unit 505 may generate output information by, for example, executing the pair created by the creating unit 504 through a quantum computer. This allows the executing unit 505 to generate output information while reducing the number of quantum bits used when solving the SAT problem.

Here, when the assigning unit 503 performs the assignment process multiple times, the executing unit 505 generates output information that enables the solution of the SAT problem to be identified for each performance of the assignment process by using the pair created by the creating unit 504 in that performance of the assignment process. The executing unit 505 generates output information by, for example, executing the pair created by the creating unit 504 through a quantum simulator 510. The executing unit 505 may generate output information by, for example, executing the pair created by the creating unit 504 through a quantum computer. This allows the executing unit 505 to generate output information while reducing the number of quantum bits used when solving the SAT problem. The executing unit 505 can improve the accuracy of the output information by referring to the multiple pairs.

The solution finding unit 506 refers to the output information generated by the executing unit 505 and determines, as a solution candidate for the SAT problem, any combination of values taken by the variables corresponding to a quantum state whose probability is the highest. This allows the solution finding unit 506 to accurately determine solution candidates for the SAT problem.

The solution finding unit 506 refers to the output information and determines, as a solution candidate for the SAT problem, any combination of values taken by the variables corresponding to a quantum state whose probability is equal to or greater than a threshold. The threshold is, for example, set in advance by a user. This allows the solution finding unit 506 to accurately determine solution candidates for the SAT problem.

The solution finding unit 506 refers to the output information and, when there is no combination of values taken by the variable corresponding to a quantum state whose probability is equal to or greater than a threshold, the solution finding unit 506 generates a notification indicating that no solution exists for the SAT problem. The solution finding unit 506 generates, for example, UNSAT. This allows the solution finding unit 506 to accurately determine that no solution to the SAT problem exists.

When there is a solution candidate that, among the determined solution candidates for the SAT problem, satisfies all the conditions expressed by the clauses, the solution finding unit 506 determines the solution candidate that satisfies all the conditions expressed by the clauses as the solution to the SAT problem. This allows the solution finding unit 506 to accurately determine the solution to the SAT problem.

When there is no solution candidate that satisfies all the conditions expressed by the clauses, the solution finding unit 506 generates a notice indicating that no solution to the SAT problem exists. The solution finding unit 506 generates, for example, UNSAT. This allows the solution finding unit 506 to accurately determine that no solution to the SAT problem exists.

The output unit 507 outputs the processing result of at least any one of the functional units. The output format is, for example, display on a display, print output to a printer, transmission to an external device via the network I/F 303, or storage to a storage area such as the memory 302 or the recording medium 305. As a result, the output unit 507 can notify the user of the processing result of at least one of the functional units, and the convenience of the information processing device 100 can be improved.

The output unit 507 outputs, for example, output information generated by the executing unit 505. For example, the output unit 507 outputs the output information generated by the executing unit 505 so that the user can refer to the output information. For example, the output unit 507 transmits the output information generated by the executing unit 505 to another computer. The other computer is, for example, the client device 202. As a result, the output unit 507 can make the output information externally referable.

The output unit 507 outputs, for example, solution candidates determined by the solution finding unit 506. The output unit 507, for example, outputs the solution candidates determined by the solution finding unit 506 so to be referenced by the user. The output unit 507, for example, transmits the solution candidates determined by the solution finding unit 506 to another computer. The other computer is, for example, the client device 202. In this manner, the output unit 507 can make the solution candidates externally referenceable.

For example, when the solution finding unit 506 determines that there is no solution to the SAT problem, the output unit 507 generates a notification indicating that there is no solution to the SAT problem. The output unit 507 outputs, for example, UNSAT. The output unit 507, for example, outputs UNSAT so as to be referenced by the user. The output unit 507, for example, transmits UNSAT to another computer. The other computer is, for example, the client device 202. In this manner, the output unit 507 can make the UNSAT externally referenceable.

The output unit 507 outputs, for example, the solution of the SAT problem determined by the solution finding unit 506. The output unit 507, for example, outputs the solution of the SAT problem determined by the solution finding unit 506 so as to be referenced by the user. The output unit 507, for example, transmits the solution of the SAT problem determined by the solution finding unit 506 to another computer. The other computer is, for example, the client device 202. In this manner, the output unit 507 can make the solution of the SAT problem externally referable.

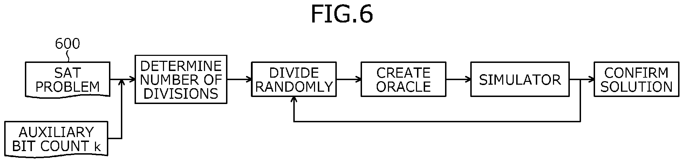

Next, an example of operation of the information processing device 100 is described with reference to Figs. 6 to 8.

Figs. 6, 7, and 8 are explanatory views depicting an example of the operation of the information processing device 100. In Fig. 6, the information processing device 100 obtains an SAT problem 600. The SAT problem 600 includes N variables and M clauses. The information processing device 100 obtains the number k of first auxiliary quantum bits that can be used to express conditions, in addition to the N quantum bits that can be used to express variables, from among the X quantum bits that can be used to solve the SAT problem. Here, k is less than M. X is N+k+1.

(6-1) The information processing device 100 determines the division number d based on the number of clauses M and the number k of first auxiliary quantum bits. The information processing device 100 determines the division number d, which is an odd number, so that d≤M/k. It is preferable that the division number d is the smallest in the range of d≤M/k.

(6-2) The information processing device 100 randomly assigns each of the M clauses to one or more of the d groups so that the number of clauses belonging to each group is k or less. Each of the M clauses belongs to at least one group. Any clause may belong to two or more groups. For example, the information processing device 100 randomly selects and assigns to a group, any of the clauses using a random number. This allows the information processing device 100 to verify whether all of one or more clauses belonging to the group are satisfied for each group.

(6-3) The information processing device 100 creates a quantum circuit by connecting a pair of an oracle circuit, in which an oracle partial circuit corresponding to each of the d groups is connected, and an amplifier circuit corresponding to the oracle circuit. The oracle partial circuit is a quantum circuit. The information processing device 100 updates the probability of each of the multiple quantum states by executing the created quantum circuit via a quantum simulator.

Each of the multiple quantum states corresponds to a combination of values taken by the N variables. The number of quantum states is 2^{N}. For example, when N=3, the number of quantum states is 8. The quantum states are, for example, 000, 001, 010, 011, 100, 101, 110, and 111. As a result, the information processing device 100 can at least amplify the probability of a quantum state that is a correct solution. It is considered that the information processing device 100 amplifies the probability of a quantum state that is an incorrect solution.

For example, a case where M=10 and k=4 is considered. The M=10 clauses are c1, c2, c3, c4, c5, c6, c7, c8, c9, and c10.

In this case, in (6-1), the information processing device 100 determines the division number d=3, which is the smallest odd number, within the range of the division number d≤10/4=2.5.

In this case, in (6-2), the information processing device 100 assigns the 10 clauses, for example, as a group 1=(c1, c2, c3), a group 2=(c4, c5, c6), and a group 3=(c7, c8, c9, c10). The information processing device 100 may assign the 10 clauses, for example, as the group 1=(c1, c4, c7), the group 2=(c2, c5, c8), and group 3=(c3, c6, c9, c10). The information processing device 100 may assign the 10 clauses in a duplicated manner, for example, as the group 1=(c1, c2, c3, c4), the group 2=(c4, c5, c6, c7), and group 3=(c7, c8, c9, c10).

Here, when the information processing device 100 uses an actual quantum computer when executing the quantum circuit, it is preferable to assign the 10 clauses without duplication in order to reduce the scale of the quantum circuit. On the other hand, when the information processing device 100 uses a quantum simulator when executing the quantum circuit, it is preferable to assign the 10 clauses in a duplicated manner in order to make the most of the available quantum bits.

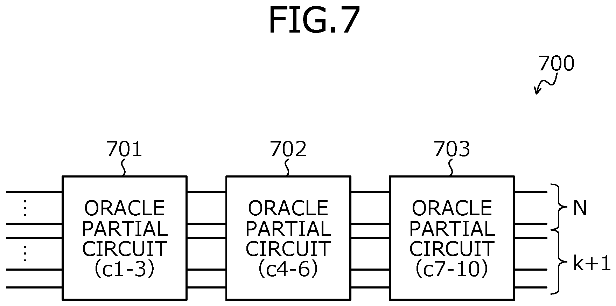

In this case, in (6-3), the information processing device 100 creates oracle partial circuits corresponding to, for example, the group 1=(c1, c2, c3), the group 2=(c4, c5, c6), and group 3=(c7, c8, c9, c10), respectively. Here, Fig. 7 is described. As depicted in Fig. 7, the information processing device 100, for example, creates oracle partial circuits 701, 702, 703, and creates an oracle circuit 700 in which the oracle partial circuits 701-703 are connected.

The oracle partial circuit 701 corresponds to the group 1=(c1, c2, c3) and has a function of inverting the phase of the second auxiliary quantum bit when all the conditions represented by c1, c2, and c3 are satisfied. The oracle partial circuit 702 corresponds to the group 2=(c4, c5, c6) and has a function of inverting the phase of the second auxiliary quantum bit when all the conditions represented by c4, c5, and c6 are satisfied. The oracle partial circuit 703 corresponds to the group 3=(c7, c8, c9, c10) and has a function of inverting the phase of the second auxiliary quantum bit when all the conditions represented by c7, c8, c9, and c10 are satisfied.

Referring back to the explanation of Fig. 6, (6-4) the information processing device 100 repeatedly performs a series of processes of (6-2) and

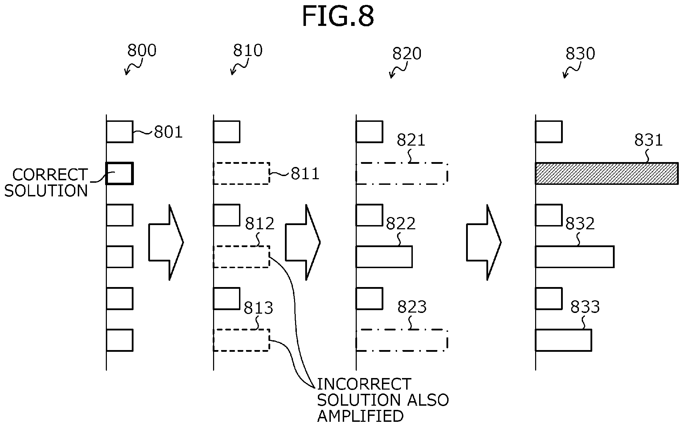

(6-3) multiple times. This allows the information processing device 100 to repeatedly update the probability of each quantum state. At this time, the information processing device 100, for example, can repeatedly amplify the probability of a quantum state that is a correct solution. In addition, the information processing device 100, for example, randomly assigns each clause each time in (6-2), and therefore, can prevent the probability of a quantum state that is an incorrect solution from being repeatedly amplified. Therefore, the information processing device 100 can accurately determine the correct solution of the SAT problem. Here, Fig. 8 is described.

A graph 800 depicted in Fig. 8 represents the initial values of respective probabilities of multiple quantum states. The initial values of the respective probabilities of the quantum states are the same. The probability of a quantum state being the correct solution is indicated by reference numeral 801. A graph 810 in Fig. 8 represents the respective probabilities of the quantum states after a series of processes (6-2) and (6-3) are performed once. The probability of a quantum state being the correct solution is amplified as indicated by reference numerals 801 to 811. On the other hand, the probability of a quantum state being an incorrect solution may also be amplified as indicated by reference numerals 812 and 813.

A graph 820 in Fig. 8 represents the respective probabilities of the quantum states after a series of processes (6-2) and (6-3) are performed twice. The probability of a quantum state being the correct solution is amplified as indicated by reference numerals 811 to 821. On the other hand, the probability of one quantum state being an incorrect solution is not amplified as depicted by the reference numerals 812 to 822. Also, the probability of one quantum state being an incorrect solution may be amplified as depicted by the reference numerals 813 to 823.

A graph 830 in Fig. 8 represents the respective probabilities of the quantum states after a series of processes (6-2) and (6-3) are performed three times. The probability of a quantum state being a correct solution is amplified the most compared to the probabilities of other quantum states as depicted by the reference numerals 821 to 831. On the other hand, the probability of one quantum state being an incorrect solution is amplified relatively little as depicted by the reference numerals 822 to 832. Also, the probability of one quantum state being an incorrect solution may be reduced without being amplified as depicted by the reference numerals 823 to 833.

In this manner, the information processing device 100 can make it possible to solve an SAT problem when the number of available quantum bits is less than N+M+1 and without preparing a relatively large oracle circuit that expresses all of the conditions expressed by each of the M clauses. For example, the information processing device 100 can solve the SAT problem by preparing multiple oracle partial circuits using N+k+1 quantum bits, which is less than N+M+1.

As depicted in Fig. 8, the information processing device 100 repeatedly performs a series of processes (6-2) and (6-3) multiple times, so that the probability of a quantum state that is a correct solution can be repeatedly amplified, and the probability of a quantum state that is an incorrect solution does not need to be repeatedly amplified. Therefore, the information processing device 100 can accurately identify the probability of each quantum state of plural quantum states in order to solve the SAT problem.

(6-5) The information processing device 100 determines a solution to the SAT problem based on the respective final probabilities of the quantum states. The information processing device 100 determines, for example, any combination of values taken by the variables corresponding to a quantum state whose probability is equal to or greater than a threshold value, as a solution candidate for the SAT problem. The information processing device 100 considers whether the determined solution candidate for the SAT problem satisfies all of the conditions, respectively, represented by the the M clauses.

The information processing device 100 determines, as a solution to the SAT problem, a solution candidate that satisfies all of the conditions, respectively, expressed by the M clauses, thereby enabling the information processing device 100 to solve the SAT problem with high accuracy. The information processing device 100 can solve an SAT problem even when the number of available quantum bits is less than N+M+1.

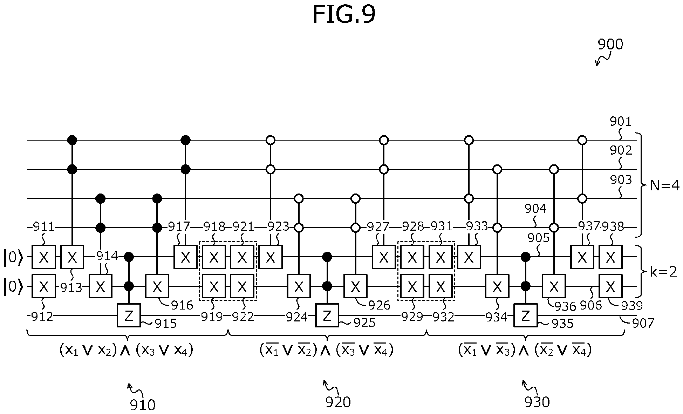

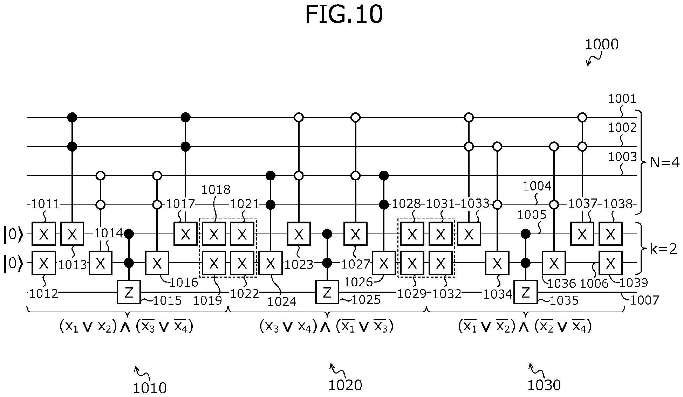

Next, a specific example of the operation of the information processing device 100 is described with reference to Figs. 9 and 10.

Figs. 9 and 10 are explanatory views depicting a specific example of the operation of the information processing device 100. In the example depicted Figs. 9 and 10, the information processing device 100 obtains an SAT problem including M=6 clauses for N=4 variables. The SAT problem is expressed, for example, by the logic formula: (x₁Vx₂)∧(x₃Vx₄)∧(¬x₁V¬x₂)∧(¬x₃V¬x₄)∧(¬x₁V¬x₃)∧(¬x₂V¬x₄). It is assumed that the number of quantum bits available to the information processing device 100 is N+k+1=7.

Hence, it is assumed that the number of first auxiliary quantum bits available to the information processing device 100 is k=2. Since M/k=6/2=3, the information processing device 100 sets the division number d=3. The information processing device 100 creates an oracle circuit by connecting three oracle partial circuits based on the division number d=3. The information processing device 100 creates, for example, an oracle circuit 900 which is described later in Fig. 9 or an oracle circuit 1000 which is described later in Fig. 9. Here, Fig. 9 is described.

In Fig. 9, a horizontal line 901 corresponds to a quantum bit representing a variable x₁. A horizontal line 902 corresponds to a quantum bit representing a variable x₂. A horizontal line 903 corresponds to a quantum bit representing a variable x₃. A horizontal line 904 corresponds to a quantum bit representing a variable x₄. Horizontal lines 905 and 906 correspond to the first auxiliary quantum bit. A horizontal line 907 corresponds to the second auxiliary quantum bit.

The information processing device 100 assigns (x₁Vx₂)∧(x₃Vx₄) to the group 1. The information processing device 100 assigns (¬x₁V¬x₂)∧(¬x₃V¬x₄) to the group 2. The information processing device 100 assigns (¬x₁V¬x₃)∧(¬x₂V¬x₄) to the group 3. The information processing device 100 creates an oracle partial circuit for each group.

The information processing device 100 creates an oracle partial circuit 910 corresponding to the group 1. The oracle partial circuit 910 includes gates 911 to 919. The gates 911 to 915 invert the phase of the second auxiliary quantum bit when (x₁Vx₂)∧(x₃Vx₄) is satisfied. Gates 916 to 919 restore the first ancillary quantum bit to its original state. In this manner, the oracle partial circuit 910 inverts the phase of the second ancillary quantum bit when (x₁Vx₂)∧(x₃Vx₄) is satisfied.

The information processing device 100 creates an oracle partial circuit 920 corresponding to the group 2. The oracle partial circuit 920 includes gates 921 to 929. The gates 921 to 925 invert the phase of the second ancillary quantum bit when (¬x₁V¬x₂)∧(¬x₃V¬x₄) is satisfied. Gates 926 to 929 restore the first ancillary quantum bit to its original state. In this manner, the oracle partial circuit 920 inverts the phase of the second ancillary quantum bit when (¬x₁V¬x₂)∧(¬x₃V¬x₄) is satisfied.

The information processing device 100 creates an oracle partial circuit 930 corresponding to the group 3. The oracle partial circuit 930 includes gates 931 to 939. Gates 931 to 935 invert the phase of the second ancillary quantum bit when (¬x₁V¬x₃)∧(¬x₂V¬x₄) is satisfied. Gates 936 to 939 restore the first ancillary quantum bit to its original state. In this manner, the oracle partial circuit 930 inverts the phase of the second auxiliary quantum bit when (¬x₁V¬x₃)∧(¬x₂V¬x₄) is satisfied.

The information processing device 100 creates an oracle circuit 900 by connecting the oracle partial circuits 910, 920, and 930. Here, in the oracle circuit 900, the gates 918, 919, 921, and 922 cancel each other out and therefore, may be deleted. Similarly, in the oracle circuit 900, the gates 928, 929, 931, and 932 cancel each other out and therefore, may be deleted.

In the oracle circuit 900, when an odd number of conditions are satisfied among the conditions of the group 1, the conditions of the group 2, and the conditions of the group 3, the final phase of the second auxiliary quantum bit is inverted. The condition for the group 1 is (x₁Vx₂)∧(x₃Vx₄). The condition for the group 2 is (¬x₁V¬x₂)∧(¬x₃V¬x₄). The condition for the group 3 is (¬x₁V¬x₃)∧(¬x₂V¬x₄).

Hence, when the information processing device 100 is executed by combining the oracle circuit 900 and the amplifier circuit, it can at least amplify the probability of a quantum state that is a correct solution. When the information processing device 100 is executed by combining the oracle circuit 900 and the amplifier circuit, it may amplify the probability of a quantum state that is an incorrect solution. Next, Fig. 10 is described.

In Fig. 10, a horizontal line 1001 corresponds to a quantum bit representing the variable x₁. A horizontal line 1002 corresponds to a quantum bit representing the variable x₂. A horizontal line 1003 corresponds to a quantum bit representing the variable x₃. A horizontal line 1004 corresponds to a quantum bit representing the variable x₄. Horizontal lines 1005 and 1006 correspond to first auxiliary quantum bits. A horizontal line 1007 corresponds to the second auxiliary quantum bit.

The information processing device 100 assigns (x₁Vx₂)∧(¬x₃V¬x₄) to the group 1. The information processing device 100 assigns (¬x₁V¬x₃)∧(¬x₃V¬x₄) to the group 2. The information processing device 100 assigns (¬x₁V¬x₂)∧(¬x₂V¬x₄) to the group 3. The information processing device 100 creates an oracle partial circuit for each group.

The information processing device 100 creates an oracle partial circuit 1010 corresponding to the group 1. The oracle partial circuit 1010 includes gates 1011 to 1019. The gates 1011 to 1015 invert the phase of the second auxiliary quantum bit when (x₁Vx₂)∧(¬x₃V¬x₄) is satisfied. The gates 1016 to 1019 restore the first auxiliary quantum bit to its original state. In this manner, the oracle partial circuit 1010 inverts the phase of the second ancillary quantum bit when (X₁Vx₂)∧(¬x₃V¬x₄) is satisfied.

The information processing device 100 creates an oracle partial circuit 1020 corresponding to the group 2. The oracle partial circuit 1020 includes gates 1021 to 1029. The gates 1021 to 1025 invert the phase of the second ancillary quantum bit when (¬x₁V¬x₃)∧(¬x₃V¬x₄) is satisfied. The gates 1026 to 1029 restore the first ancillary quantum bit to its original state. In this manner, the oracle partial circuit 1020 inverts the phase of the second ancillary quantum bit when (¬x₁V¬x₃)∧(¬x₃V¬x₄) is satisfied.

The information processing device 100 creates an oracle partial circuit 1030 corresponding to the group 3. The oracle partial circuit 1030 includes gates 1031 to 1039. The gates 1031 to 1035 invert the phase of the second ancillary quantum bit when (¬x₁V¬x₂)∧(¬x₂V¬x₄) is satisfied. The gates 1036 to 1039 restore the first ancillary quantum bit to its original state. In this manner, the oracle partial circuit 1030 inverts the phase of the second ancillary quantum bit when (¬x₁V¬x₂)∧(¬x₂V¬x₄) is satisfied.

The information processing device 100 creates the oracle circuit 1000 by connecting the oracle partial circuits 1010, 1020, and 1030. Here, in the oracle circuit 1000, the gates 1018, 1019, 1021, and 1022 cancel each other out and therefore, may be deleted. Similarly, in the oracle circuit 1000, the gates 1028, 1029, 1031, and 1032 cancel each other out and therefore, may be deleted.

In the oracle circuit 1000, when an odd number of conditions are satisfied among the condition of the group 1, the condition of the group 2, and the condition of the group 3, the final phase of the second ancillary quantum bit is inverted. The condition for the group 1 is (x₁Vx₂)∧(¬x₃V¬x₄). The condition for the group 2 is (¬x₁V¬x₃)∧(¬x₃V¬x₄). The condition for the group 3 is (¬x₁V¬x₂)∧(¬x₂V¬x₄).

For this reason, when the information processing device 100 combines and executes the oracle circuit 1000 with an amplifier circuit, it is possible to at least amplify the probability of a quantum state that is a correct solution. When the information processing device 100 combines and executes the oracle circuit 1000 with an amplifier circuit, the probability of a quantum state resulting in an incorrect solution may be amplified.

The information processing device 100, for example, executes a pairing of an oracle circuit 900 and an amplifier circuit for the oracle circuit 900, and executes a pairing of an oracle circuit 1000 and an amplifier circuit for the oracle circuit 1000 and thereby calculates the probability of each quantum state. The information processing device 100, for example, determines a solution candidate for the SAT problem, based on the probability of each quantum state. The solution candidate is any combination (x₁, x₂, x₃, x₄) of values taken by the variables x₁, x₂, x₃, and x₄. For example, the information processing device 100 determines a combination corresponding to a quantum state whose probability is equal to or greater than a threshold value as a solution candidate for the SAT problem.

Here, the information processing device 100 determines the combinations (x₁, x₂, x₃, x₄)=(1, 1, 1, 0), (1, 1, 0, 0), (1, 0, 1, 1), (1, 0, 0, 1), (0, 1, 1, 1), (0, 1, 1, 0) as solution candidates for the SAT problem. This allows the information processing device 100 to appropriately narrow down the combinations (x₁, x₂, x₃, x₄) that will be solution candidates from the 16 combinations (x₁, x₂, x₃, x₄). From among the determined solution candidates, the information processing device 100 determines, as the solution for the SAT problem, the solution candidate that satisfies all the conditions, respectively, expressed by the six clauses. The information processing device 100 determines, for example, the combination (x₁, x₂, x₃, x₄)=(1, 0, 0, 1), (0, 1, 1, 0) as the solution to the SAT problem.

This allows the information processing device 100 to appropriately determine the solution to the SAT problem while reducing the number of quantum bits used when solving the SAT problem. For example, in the conventional technique, when solving an SAT problem including M clauses for N variables, N+M+1 quantum bits are used. In contrast, the information processing device 100 can, for example, solve the SAT problem by using only N+k+1 quantum bits. Here, M>k. The information processing device 100 can narrow down the solution candidates of the SAT problem and therefore, can reduce the processing time required to solve the SAT problem.

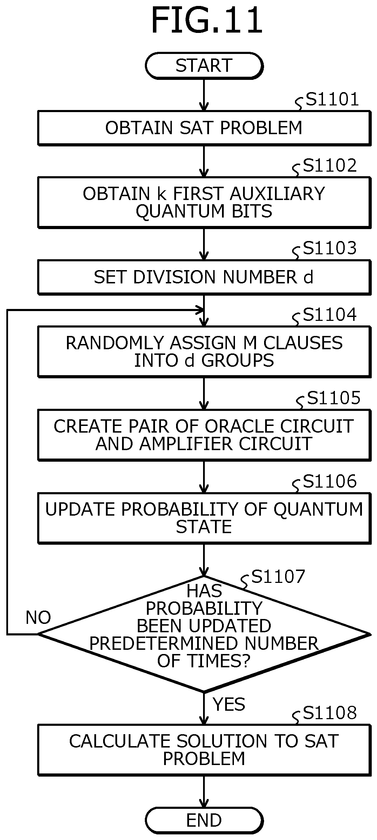

Next, an example of the overall processing procedure executed by the information processing device 100 is described with reference to Fig. 11. The overall processing is implemented by, for example, the CPU 301 depicted in Fig. 3, storage areas such as the memory 302 and the recording medium 305, and the network I/F 303.

Fig. 11 is a flowchart depicting an example of the overall processing procedure. In Fig. 11, the information processing device 100 obtains an SAT problem including M clauses related to N variables (step S1101). Next, the information processing device 100 obtains the number k of first auxiliary quantum bits available for expressing whether a condition is satisfied (step S1102). Then, the information processing device 100 sets the division number d representing how many groups the M clauses are to be divided into, based on M and k (step S1103).

Next, the information processing device 100 randomly assigns the M clauses into d groups, based on the division number d (step S1104). Then, the information processing device 100 creates a pair of an oracle circuit in which the oracle partial circuits corresponding to each of the d groups are connected, and an amplifier circuit corresponding to the oracle circuit (step S1105). Thereafter, the information processing device 100 uses a quantum simulator to execute a connected quantum circuit in which the created pairs are connected and, thereby updates the probability of the quantum state (step S1106).

Next, the information processing device 100 determines whether the probability of the quantum state has been updated a predetermined number of times (step S1107). Here, when the probability has not been updated a predetermined number of times (step S1107: NO), the information processing device 100 returns to the process at step S1104. On the other hand, when the probability has been updated a predetermined number of times (step S1107: YES), the information processing device 100 proceeds to the process at step S1108.

At step S1108, the information processing device 100 calculates a solution to the SAT problem, based on the probability of the updated quantum state (step S1108). Then, the information processing device 100 ends the entire process. As a result, the information processing device 100 can accurately calculate a solution to the SAT problem while reducing the number of quantum bits used when calculating the solution to the SAT problem.

As described above, the information processing device 100 can obtain multiple clauses that express a satisfiability problem regarding multiple variables that take the value of 0 or 1, and that express a condition satisfied by one or more of the multiple variables. The information processing device 100 can assign each of the multiple clauses to one or more groups among an odd number of groups based on the number of auxiliary quantum bits used when expressing whether a condition is satisfied. For each of the odd number of the groups to which the multiple clauses are assigned, the information processing device 100 can create a quantum circuit that expresses all the clauses belonging to the group among the multiple clauses. The information processing device 100 can generate information that makes it possible to identify the solution to the SAT problem by using an oracle circuit that connects the created quantum circuits according to the Grover algorithm and an amplifier circuit. As a result, the information processing device 100 can reduce the number of quantum bits used when solving the SAT problem.

According to the information processing device 100, an odd number of the groups that is equal to or greater than a value obtained by dividing the number of clauses among the multiple clauses by the number of auxiliary quantum bits can be used. This allows the information processing device 100 to appropriately set the number of the groups to which each of the multiple clauses is assigned.

According to the information processing device 100, each of the multiple clauses can be assigned to one or more of the odd number of the groups so that at least one of the multiple clauses is assigned to two or more of the odd number of the groups in a duplicated manner. This allows the information processing device 100 to improve the accuracy of solving the SAT problem.

According to the information processing device 100, each of the clauses can be assigned to one or more of the odd number of the groups so that each of the clauses is not assigned to two or more of the odd number of the groups in a duplicated manner. This allows the information processing device 100 to reduce the number of quantum bits used when solving the SAT problem.

According to the information processing device 100, it is possible to repeatedly perform multiple times the assignment of each clause to one or more groups among the odd number of the groups. According to the information processing device 100, for each performance of the assignment of the clauses and for each of the odd number of the groups to which the clauses are assigned in that performance of the assignment, it is possible to create a quantum circuit that expresses all of the clauses that among the multiple clauses, belong to the group. According to the information processing device 100, for each performance of the assignment of the clauses, it is possible to create an oracle circuit and an amplifier circuit that are connected to the quantum circuits created in that performance of the assignment of the clauses. According to the information processing device 100, it is possible to generate information that makes it possible to identify the solution to the SAT problem by using each pair of the created oracle circuit and amplifier circuit. In this manner, the information processing device 100 can accurately generate information that makes it possible to identify the solution to the SAT problem.

According to the information processing device 100, it is possible to generate information that makes it possible to identify the solution to the SAT problem, including the probability of a quantum state that represents each combination of multiple combinations that can be formed by the values that the variables take. In this manner, the information processing device 100 can make it possible to identify the solution to the SAT problem.

According to the information processing device 100, by referring to information that enables a solution to be identified for the SAT problem, any combination of values taken by each variable corresponding to a quantum state with the highest probability can be determined as a solution candidate for the SAT problem and output. This allows the information processing device 100 to accurately determine solution candidates for the SAT problem.

According to the information processing device 100, by referring to information that enables a solution to be identified for the SAT problem, any combination of values taken by each variable corresponding to a quantum state with a probability equal to or greater than a threshold can be determined as a solution candidate for the SAT problem and output. This allows the information processing device 100 to accurately determine solution candidates for the SAT problem.

According to the information processing device 100, by referring to information that enables a solution to be identified for the SAT problem, when there is no combination of values taken by each variable corresponding to a quantum state with a probability equal to or greater than a threshold, it can be determined that no solution to the SAT problem exists. According to the information processing device 100, a notification can be generated and output indicating that no solution to the SAT problem exists. This allows the information processing device 100 to accurately determine that no solution to the SAT problem exists.

According to the information processing device 100, when there is a solution candidate that satisfies all the conditions expressed by each clause, among the determined solution candidates of the SAT problem, the solution candidate that satisfies all the conditions expressed by each clause can be determined as the solution of the SAT problem and output. According to the information processing device 100, when there is no solution candidate that satisfies all the conditions expressed by each clause, a notice indicating that there is no solution to the SAT problem can be generated and output. This allows the information processing device 100 to accurately determine the solution to the SAT problem.

The information processing method described in the present embodiment may be implemented by executing a prepared program on a computer such as a personal computer and a workstation. The program is stored on a non-transitory, computer-readable recording medium such as a hard disk, a flexible disk, a compact disc (CD)-ROM, a magneto optical disc (MO), and a digital versatile disc (DVD), read out from the computer-readable medium, and executed by the computer. The program may be distributed through a network such as the Internet.

According to one aspect of the present invention, it is possible to reduce the number of quantum bits used when solving a satisfiability problem.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A recording medium storing therein a program for causing a computer to execute a process for processing information, the process comprising:
obtaining (501) a plurality of clauses that express a satisfiability problem (110) for a plurality of variables taking a value of 0 or 1, each of the plurality of clauses representing a condition satisfied by one or more of the plurality of variables;
dividing (503) the obtained plurality of clauses into an odd number of groups (120-123) based on a number of auxiliary quantum bits used in expressing whether the condition is satisfied, the dividing including assigning each of the plurality of clauses to one or more of the odd number of the groups such that a number of clauses belonging to each of the odd number of the groups is not more than the number of the auxiliary quantum bits;
creating (504) a plurality of respective quantum (130-133) circuits for the odd number of groups, each of the plurality of respective quantum circuits expressing all of the clauses belonging to a corresponding one of the odd number of groups and created using a plurality of quantum bits corresponding to each of the plurality of variables and the auxiliary quantum bits; and
generating (504), according to the Grover algorithm, information that enables a solution to the satisfiability problem to be identified using an oracle circuit (140) in which the created plurality of respective quantum circuits are coupled to each other, and an amplifier circuit (150) that amplifies a probability of any quantum state that represents any combination of values, respectively, taken by the plurality of variables in accordance with the oracle circuit.

2. The recording medium according to claim 1, wherein
the odd number is equal to or greater than a value obtained by dividing a total quantity of the plurality of clauses by the number of the ancillary quantum bits.

3. The recording medium according to claim 1 or 2, wherein
the assigning includes assigning each of the plurality of clauses to one or more of the odd number of groups such that at least any of the plurality of clauses is assigned to two or more of the odd number of groups in a duplicated manner.

4. The recording medium according to claim 1 or 2, wherein
the assigning includes assigning each of the plurality of clauses to one or more of the odd number of groups such that each of the clauses is not assigned to two or more of the odd number of groups in a duplicated manner.

5. The recording medium according to any one of claims 1 to 4, wherein
the assigning includes repeatedly assigning each of the plurality of clauses to one or more of the odd number of groups a plurality of times,
the creating includes creating the plurality of respective quantum circuits for the plurality of times, the each of the plurality of respective quantum circuits expressing all of the clauses belonging to the corresponding one of the odd number of groups to which the clauses are assigned in the each of the plurality of times, and
the generating includes creating, for each of the plurality of times, the oracle circuit in which the plurality of respective quantum circuits created in the each of the plurality of times are coupled to each other, and the amplifier circuit that amplifies the probability of any quantum state representing any combination of the values taken by the plurality of variables in accordance with the oracle circuit, and generating the information that enables the solution to the satisfiability problem to be identified, using each pair of the created oracle circuit and the created amplifier circuit.

6. The recording medium according to claim 5, wherein
the information enabling the solution to the satisfiability problem to be identified includes a plurality of respective probabilities of a plurality of quantum states, respectively, representing a plurality of combinations that can be formed by the values taken by the plurality of variables.

7. The recording medium according to claim 6, the process further comprising
referring to the information enabling the solution to the satisfiability problem to be identified, and determining and outputting, as a candidate solution to the satisfiability problem, any one of the plurality of combinations of the values taken by variables that, of the plurality of variables, correspond to a quantum state that, of the plurality of quantum states, has a highest probability of the plurality of respective probabilities.

8. The recording medium according to claim 6, the process further comprising
referring to the information enabling the solution to the satisfiability problem to be identified, and determining and outputting, as the candidate solution to the satisfiability problem, any one of the plurality of combinations of the values taken by variables that, of the plurality of variables, correspond to a quantum state that, of the plurality of quantum states, has a probability equal to or higher than a threshold.

9. The recording medium according to claim 8, further comprising
referring to the information enabling the solution to the satisfiability problem to be identified, and generating and outputting a notice indicating that no solution to the satisfiability problem exists, when there is no combination of values taken by the plurality of variables corresponding to a quantum state having the probability equal to or higher than the threshold.

10. The recording medium according to claim 8, wherein
the determining includes determining a plurality of the solution candidates for the satisfiability problem and when there is a solution candidate that satisfies all of the conditions represented by the clauses among the determined solution candidates, the solution candidate that satisfies all of the conditions represented by the clauses is output, and when there is no solution candidate that satisfies all of the conditions represented by the clauses, the process further comprises generating and outputting a notice indicating that no solution to the satisfiability problem exists.

11. An information processing method executed by a computer, the information processing method comprising:
obtaining a plurality of clauses that express a satisfiability problem for a plurality of variables taking a value of 0 or 1, each of the plurality of clauses representing a condition satisfied by one or more of the plurality of variables;
dividing the obtained plurality of clauses into an odd number of groups based on a number of auxiliary quantum bits used in expressing whether the condition is satisfied, the dividing including assigning each of the plurality of clauses to one or more of the odd number of the groups such that a number of clauses belonging to each of the odd number of the groups is not more than the number of the auxiliary quantum bits;
creating a plurality of respective quantum circuits for the odd number of groups, each of the plurality of respective quantum circuits expressing all of the clauses belonging to a corresponding one of the odd number of groups and created using a plurality of quantum bits corresponding to each of the plurality of variables and the auxiliary quantum bits; and
generating, according to the Grover algorithm, information that enables a solution to the satisfiability problem to be identified using an oracle circuit in which the created plurality of respective quantum circuits are coupled to each other, and an amplifier circuit that amplifies a probability of any quantum state that represents any combination of values, respectively, taken by the plurality of variables in accordance with the oracle circuit.

12. An information processing device, comprising:
a memory; and
a processor coupled to the memory, the processor configured to:
obtain a plurality of clauses that express a satisfiability problem for a plurality of variables taking a value of 0 or 1, each of the plurality of clauses representing a condition satisfied by one or more of the plurality of variables;
divide the obtained plurality of clauses into an odd number of groups based on a number of auxiliary quantum bits used in expressing whether the condition is satisfied, each of the plurality of clauses being assigned to one or more of the odd number of the groups such that a number of clauses belonging to each of the odd number of the groups is not more than the number of the auxiliary quantum bits;
create a plurality of respective quantum circuits for the odd number of groups, each of the plurality of respective quantum circuits expressing all of the clauses belonging to a corresponding one of the odd number of groups and created using a plurality of quantum bits corresponding to each of the plurality of variables and the auxiliary quantum bits; and
generate, according to the Grover algorithm, information that enables a solution to the satisfiability problem to be identified using an oracle circuit in which the created plurality of respective quantum circuits are coupled to each other, and an amplifier circuit that amplifies a probability of any quantum state that represents any combination of values, respectively, taken by the plurality of variables in accordance with the oracle circuit.
